# EUROPEAN PATENT APPLICATION

(11) **EP 4 717 738 A1**
(43) Date of publication of application: **01.04.2026**
(21) Application number: 24203574.9
(22) Date of filing: 30.09.2024
(51) Int. Cl.: C09D 5/00, B29B 17/02, C08F 18/22, C08F 222/10, C09D 4/00

(54) **UV-CURABLE DEINKABLE PRIMER**

(71) Applicant: Siegwerk Druckfarben AG & Co. KGaA, 53721 Siegburg (DE)
(72) Inventor: Petry, Volker, 4058 Basel (CH)
(74) Representative: Hepp Wenger Ryffel AG

(57) **Abstract**

The present invention is related to an actinic curable, preferably UV-curable primer composition, comprising a binder component, which contains an acrylate monomer and an acrylate oligomer or polymer, and a photoinitiator, characterized in that the acrylate monomer is acryloyl morpholine. The present invention is furthermore related to a printed product, preferably printed film or laminate (1), comprising a primer layer (3) made from the above primer composition, and to an article, preferably a flexible packing, comprising said printed product, preferably printed film or laminate (1).

## Description

The present invention is related to the delamination and/or deinking of substrates, such as flexible packaging articles.

Due to increasing environmental concerns, the conventional approach of throwing away articles after use has to be replaced by approaches involving the recycling of the articles or materials making up those articles.

This applies especially to plastic articles. Articles made of plastic (i.e. synthetic polymers such as polyethylene (PE), polypropylene (PP) or polyethylene terephthalate (PET)) are extremely efficient for the purposes of flexible packaging. However, this advantage has led to an extreme use of plastic materials, and without efficient recycling the environmental pollution that can already be observed (e.g. pollution of the oceans) will increase. This includes increase health hazards due to microplastic waste entering into the environment. Moreover, the plastic waste is landfilled with the high risk of leaking into nature.

Unrecycled plastic material is currently largely incinerated, which is detrimental with respect to the amount of CO₂ released therewith and its contribution to global warming.

In some regions (e.g. the EU) regulations have been implemented requiring a certain recycling rate to be obtained until a certain point in time. Furthermore and independent from regulations, all major brand owners made commitments to increase the amount of recycled material in their products.

Accordingly, there is a need for efficient recycling concepts for plastic material.

With respect to printed articles, this imposes additional requirements. The recyclability of material and quality of recycled material should not be impaired by the printing inks applied thereupon. Extremely critical in this respect is the extrusion step during recycling where the material is processed at higher temperatures resulting in a deterioration of the recycled product quality due to the limited heat resistance of binders and/or pigments present in the printing ink layer. Furthermore, caused by the pigment in the printed layer, the recycled material is coloured and not transparent, which limits the area of application.

Accordingly, before recycling of laminated plastic articles such as flexible packaging products, it is necessary to delaminate the product and subsequently remove any ink layers and additional functional layers.

In EP-4 435 062 A1, a primer composition for delaminating and/or deinking of a substrate is described, wherein said primer composition is solvent-based and comprises a binder system that comprises a modified rosin resin and a film-forming polyurethane.

In WO-2021/257866 A1, an actinic radiation curable primer composition is described comprising a carboxylated acrylate, a urethane acrylate, a monomer, and a photoinitiator, wherein the composition, when applied onto a surface and cured, (1) maintains at least 80% adhesion to the surface in a tape adhesion test and (2) is at least 80% removed from the surface by a caustic wash.

It was the problem of the present invention to provide an improved primer composition for delamination and/or deinking of printed products, such as laminated packaging structures.

The above problem is solved by the present invention.

In detail, the present invention is related to an actinic curable, preferably UV-curable primer composition, comprising
- a binder component, which contains an acrylate monomer and an acrylate oligomer or polymer, and
- optionally a photoinitiator,
characterized in that the acrylate monomer is acryloyl morpholine.

The present invention is related to any kind of printed products, such as printed films or laminates, and is especially related to laminates, i.e. laminated products.

According to the present invention, the term "printed film" comprises a substrate layer on which at least one printed layer is provided. For example, the substrate layer may be a plastic layer, preferably a transparent plastic layer.

According to the present invention, the term "laminate" refers to a product that consists of a stack of layers, wherein one layer (an outermost layer or a core layer) is defined as substrate or substrate layer. For example, the substrate layer may be a plastic layer, preferably a transparent plastic layer. A laminate may also preferably comprise more than one of those substrate layers, most preferably as outermost layers, and in between these substrate layers there may be provided a printed layer or several printed layers. Alternatively, as second outermost layer an overprint varnish may be provided. In both cases, the intermediate printed layers are protected from environmental influences.

In such a laminate, the one or more printed layers are typically connected to a substrate layer via a primer layer and/or an adhesive layer. The terms "primer composition" and "primer layer" are known in the art and refer to a composition or layer made therefrom which is applied onto a surface of a substrate in order to provide said surface with the required properties for applying a printing layer thereupon. These required properties comprise, for example, good adhesion properties, so that the printing ink layer applied thereupon does not detach during normal operation conditions.

In accordance with the present invention, the primer composition is a specific primer composition that renders a primer layer made therefrom suitable for use in a laminate, i.e. it has good adhesion properties, reduced brittleness, and in particular high bond strength values can be achieved. Moreover, according to the present invention the specific primer composition renders a primer layer made therefrom suitable for delamination and/or deinking. This involves characteristics such as very good solubility or dispersibility in an alkaline aqueous medium in combination with very good overprintability and water resistance.

The primer composition according to the present invention is curable by actinic radiation, and preferably is UV-curable. Preferably, the primer composition according to the present invention can be cured by any actinic radiation. The term "actinic radiation" as used herein includes all electromagnetic radiation that induces a chemical reaction, such as a polymerization reaction between the curable compounds described herein. Suitable actinic radiations include, but are not limited ultraviolet (UV) radiation, light-emitting diode (LED) radiation, electronic beam (EB) radiation, and other emission or transmission of energy in the form of waves or particles through space or a material medium.

According to the present invention, said primer composition comprises as a first binder component an acrylate monomer, which is acryloyl morpholine.

Acryloyl morpholine is a commonly known and commercially available compound with the following structure:

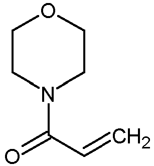

It was found that an actinic curable, preferably UV-curable primer composition comprising acryloyl morpholine has favorable properties.

According to the present invention, said actinic curable, preferably UV-curable primer composition comprises as a further binder component an acrylate oligomer or polymer.

An oligomer is typically defined as having a small number of repeating units (e.g. in the above formula n is small), whereas a polymer is typically defined as having a large number of repeating units (e.g. in the above formula n is large). However, there is no sharp distinction between an oligomer and a polymer. In accordance with the present invention, an oligomer is defined as having a weight average molecular weight (Mw) below 10000 g/mol, preferably below 5000 g/mol.

Examples of acrylated oligomers or polymers that can be used in the present invention include: polyester acrylates, urethane acrylates, alkoxylated acrylated oligomers, epoxy acrylates, aminated acrylates, as well as the respective methacrylic derivatives (i.e. where methacrylate is at least partially used instead of acrylate).

Examples of suitable polyester (meth)acrylates are acrylated epoxidized soybean oil compounds like EBECRYL^{®} 860 (Cytec), fatty acid containing polyester (meth)acrylates like EBECRYL^{®} 870, EBECRYL^{®} 657, EBECRYL^{®} 450 (Cytec), and polyester (meth)acrylates like EBECRYL^{®} 800, EBECRYL^{®} 884, EBECRYL^{®} 810 and EBECRYL^{®} 830 (Cytec).

Examples of suitable alkoxylated acrylated oligomers are epoxy (meth)acrylates, for example the di(meth)acrylate of diglycidyl ether of Bisphenol A (BADGED(M)A), and modifications thereof (see for instance EBECRYL^{®} 3700 or EBECRYL^{®} 600, EBECRYL^{®} 3701, EBECRYL^{®} 3703, EBECRYL^{®} 3708 and EBECRYL^{®} 3639 from Cytec). According to the present invention, a water-soluble alkoxylated (i.e. aliphatic) acrylated oligomer is preferred.

Examples of suitable urethane (meth)acrylates are EBECRYL^{®} 284, EBECRYL^{®} 264, EBECRYL^{®} 210, EBECRYL^{®} 230, EBECRYL^{®} 1290 (Cytec).

Examples of suitable aminated (meth)acrylates are EBECRYL^{®} 80, EBECRYL^{®} 81, EBECRYL^{®} 83, EBECRYL^{®} 7100, P115 and others.

According to a preferred embodiment of the present invention, the binder may contain a combination of the above acrylate oligomers and polymers. For example, the binder may contain an alkoxylated acrylated oligomer and an aminated acrylate oligomer.

According to a preferred embodiment of the present invention, the binder may contain a difunctional aliphatic acrylate resin, an amine-modified polyether acrylate, and combinations thereof. According to a preferred embodiment of the present invention, the composition contains 50-95 wt.-%, preferably 70-90 wt.-% based on the entire amount of said composition, of said binder component.

According to a preferred embodiment of the present invention, the composition contains 10-40 wt.-%, preferably 15-35 wt.-% based on the entire amount of said composition, of said acrylate monomer. Accordingly, the remainer of the binder component, i.e. 10-85 wt.-%, preferably 35-75 wt.-% based on the entire amount of said composition, is composed of other binders, preferably of a combination of the above acrylate oligomers and polymers.

According to a preferred embodiment of the present invention, the composition may furthermore comprise at least one photoinitiator. For electron bean (EB) curable composition, a photoinitiator is not necessary, but for other types of curing by actinic radiation, such as UV curing, a photoinitiator has to be present

Various known photoinitiators may be used, and the present actinic radiation curable composition may be cured under various light sources, including but not limited to mercury bulb, LED, energy beam, or long wavelength lamp. Suitable photoinitiators are known to the skilled person and are e.g. of the acetophenone type (e.g. 2,2-Dimethoxy-2-phenylacetophenone (Omnirad BDK), the benzophenone type (e.g. methyl 2-benzoylbenzoate (MBB), the α-aminoketone type (e.g. Irgacure 369, Irgacure 907), the α-hydroxyketone type (e.g. Irgacure 2959), thioxanthones (e.g. ITX), oligomeric thioxanthones (e.g. Genopol TX-1), oligomeric amino benzoates (Genopol AB-1), oligomeric benzophenones (e.g. Genopol BP-1)or the phosphine oxide type (e.g Irgacure 819 or TPO). Preferred photoinitiators include, for example, commercially available diphenyl(2,4,6-trimethylbenzoyl)phosphine oxide (TPO), 2-hydroxy-2-methylpropiophenone (HMPP, Irgacure 1173), 1-hydroxycyclohexyl phenyl ketone (HCPK), and a combination thereof. Preferably, the primer composition of the present invention comprises 0 to 10 wt.-%, more preferably 1 to 5 wt.-%, based on the weight of the entire primer composition, of one or more of such photoinitiators.

According to a preferred embodiment of the present invention, the composition may furthermore comprise at least one additive. Any additive conventionally used in an actinic curable, preferably UV-curable composition may be present. For example, fillers, matting agents, stabilizers, flow and anti-crater additives, surfactants, and defoamers may be mentioned.

Suitable fillers are, for example, TiO₂ or silica.

Suitable matting agents include, for example, commercially available precipitated silica products.

Suitable stabilizers include, for example, commercially available products under XAMCHEM XC-SB302.

Suitable defoamer include, for example, commercially available products under Evonik 971.

Suitable flow and anti-crater additives include, for example, commercially available products such as Dynoadd F1.

Suitable surfactants include conventional non-ionic surfactants and cross-linkable surfactants such as silicone diacrylates.

Preferably, the primer composition of the present invention comprises 0 to 5 wt.-%, more preferably 0,1 to 3 wt.-%, based on the weight of the entire primer composition, of one or more of such additives.

The primer composition according to the present invention may also comprise at least one organic solvent. Any organic solvent that is conventionally used in a primer or printing inks compositions may be used. Examples are esters such as ethyl acetate, n-propyl acetate, isopropyl acetate, or neopentyl acetate, or alcohols such as ethanol, n-propanol or isopropanol. Preferably, the primer composition of the present invention comprises 1 to 50 wt.-%, more preferably 1 to 20 wt.-%, even more preferred 1.5 to 10 wt.-%, based on the weight of the entire primer composition, of said at least one solvent.

The primer composition according to the present invention may also comprise at least one neutralizing agent. Suitable neutralizing agents are organic bases, including, but not limited to, ammonia, triethanolamine, triisopropanol amine, dimethyl aminoethanol or arginine. Alternatively, inorganic bases like alkali metal oxides, alkali metal hydroxides or alkali metal carbonates may be used, with sodium hydroxide or potassium hydroxide being the preferred inorganic bases. Where tertiary amines such as triethanolamine are used as neutralizing agents, they can serve a dual function as both neutralizing agent and as an amine synergist. Preferably, the primer composition of the present invention comprises 1 to 10 wt.-%, more preferably 2 to 8 wt.-%, based on the weight of the entire primer composition, of said at least one neutralizing agent.

The primer composition according to the present invention may be prepared by mixing the above ingredients by a conventional mixing process, such as stirring using a stirrer, optionally under heating.

The present invention also encompasses a method of preparing a laminate, comprising the step of applying the primer composition described above onto a free surface of a substrate layer.

The primer composition can be applied onto the substrate by any conventional coating technique, preferably by flexographic or gravure printing.

Gravure and flexography are the major printing processes for printing packing materials. These processes can be used for printing a large variety of substrates, such as paper, cardboard, or plastic substrates. The gravure and flexographic printing processes are well-known. Reference may be made, for example, to Leach/Pierce (Eds.), The printing ink manual, Blueprint, London, 5th ed. 1993, p, 33-53. Also the characteristics of gravure and flexographic inks are known to the skilled man. Reference may be made, for example, to Leach/Pierce (Eds.), The printing ink manual, Blueprint, London, 5th ed. 1993, p, 473-598. The respective content of those chapters is incorporated herein by reference.

The primer layer is preferably applied onto the substrate in such an amount that a dry coating weight of 0.2-1.5 g/m², preferably 0.4-1.3 g/m², and especially preferred 0.6-1.0 g/m² is obtained.

The printed product, preferably printed film or laminate (laminated product), of the present invention is characterized by the presence of a primer layer made from the primer composition described above, on a surface of a substrate layer.

According to the present invention, the terms "substrate" and "substrate layer" are used interchangeably.

According to a preferred embodiment of the present invention, on the surface of the primer layer remote from said substrate layer there is a stack of layers comprising a second substrate layer. In other words, there is a primer layer made from the primer composition described above, on a surface of a substrate layer, and on the other surface of the primer layer, there is applied said stack of layers comprising a second substrate layer or an overprint varnish layer as outermost layer.

If more than one substrate layer is present, the substrate layers of the corresponding laminate can be the same or different and any substrate such as a plastic substrate. Preferably, the substrate is a plastic substrate as conventionally used in the field of plastic laminates. Examples of suitable plastic substrates are polyethylene (PE), for example low density polyethylene (LDPE), polypropylene (PP), for example cast polypropylene (CPP) or oriented polypropylene (OPP) or silicone oxide coated oriented polypropylene (OPP Siox), polyamide (PA) or polyethylene terephthalate (PET). These substrates may be coated with a metallization layer. For example, a substrate may be coated with a layer of a metal oxide such as aluminium oxide. An example is PP ALOX, which is a polypropylene substrate that has been coated with an aluminium oxide layer. Typically, such metallization provides for barrier properties.

According to a preferred embodiment of the present invention, said stack of layers furthermore comprises, between said primer layer and said second substrate layer or an overprint varnish layer, at least one additional layer selected from the group consisting of an ink layer and a functional coating, for example a barrier layer such as an oxygen barrier layer.

Such barrier layers are known in the art. Preferably, said barrier layer is a gas impermeable or a gas resistant barrier layer. As an example, a barrier coating like an ethylene-vinylalcohol (EVOH) coating may be used for the purposes of the present invention. A preferred barrier layer is disclosed in WO 2023/285183 A1. The barrier layer is preferably applied in a dry solids dry coating weight in the range from 0,2 g/m² to 2 g/m², preferably 0,5 g/m² to 1,5 g/m², more preferably 0,6 g/m² to 1,2 g/m².

Preferably, said at least one ink layer is selected from the group consisting of a white layer, a black ink layer, a colored ink layer, and combinations thereof.

The ink layer(s) used in the printed product, preferably printed film or laminate, of the present invention may be made from any ink conventionally used in flexible packaging applications. Such an ink can be applied on the substrate by any standard technique, preferably by flexographic or gravure printing.

According to a preferred embodiment of the present invention, a printed product, preferably printed film or laminate, may be formed by applying the primer composition according to the present invention onto a substrate and applying one or more printing ink layer onto the free surface of the applied primer layer. On top of said stack, an overprint varnish layer or a second substrate (optionally via an adhesive layer) may be applied. A conventional lamination process using a conventional lamination machine may be used.

Any overprint varnish conventionally used in flexible packaging applications may be used. Such overprint varnishes are known and can be applied on the printing ink layer by any standard technique, preferably by flexographic or gravure printing. Overprint varnish (OVP) compositions generally differ from ink compositions by the absence of a colorant such as a pigment. Thus, the above description for compositions for making ink layers also applies with respect to the binder component, at least one solvent, and the optional additives. According to a preferred embodiment, the overprint varnish layer is made from UV-curing compositions.

Preferably, the printed product, preferably printed film or laminate, according to the present invention has a bond strength value, provided by the adhesive layer of the present invention, of higher than 1.5N/15mm, as measured with an Instron Universal device or an MTS Instrument Criterion (model 41).

The printed product, preferably printed film or laminate, according to the present invention has good delamination and/or deinking properties.

Thus, the present invention is also related to a of delaminating and/or deinking a printed product, preferably printed film or laminate, as described above, or an article comprising such a printed product, comprising a step of treating the printed product or article in an alkaline aqueous medium so as to dissolve the primer layer that is present in the printed product or the article.

According to the present invention, said treatment step (herein also referred to as delamination and/or deinking) involves treatment of a printed product, preferably printed film or laminate, or article comprising said printed product with an alkaline aqueous medium having a pH value from more than 7 to 13, more preferably 7.5 to 12.5, preferably at an elevated temperature of between 50 to 90°C, preferably 60 to 85°C, within a period of time in the range between 0 to 40 minutes, preferably 1 to 30 minutes, especially preferable 2 to 10 minutes.

According to a preferred embodiment of the present invention, said alkaline aqueous medium comprises 0,1 to 5 wt.%, preferably 0,5 to 3 wt.-%, based on the entire weight of the aqueous medium, of a base, preferably an alkali or earth alkali hydroxide, such as sodium hydroxide (NaOH), potassium hydroxide (KOH), or lithium hydroxide (LiOH).

The alkaline aqueous medium may also contain a surfactant. According to the present invention, any conventionally available surfactant may be used. Preferably, said alkaline aqueous medium comprises 0,1 to 5 wt.%, preferably 0,1 to 1 wt.-%, based on the entire weight of the aqueous medium, of a surfactant. Optionally, also a defoamer may be used in the same amounts as the surfactant.

It has been found that under those conditions delamination and/or deinking occurs within a sufficiently short time.

The delamination and/or deinking step of the present invention can be carried out in any conventional device. Preferably, said device is equipped with a heating unit and a stirring unit.

According to a preferred embodiment of the present invention, the printed product, preferably printed film or laminate, or article comprising said printed product to be delaminated and/or deinked is comminuted into smaller pieces before deinking is carried out. It has been found that smaller pieces can be delaminated and/or deinked more rapidly than larger pieces. The suitable size of the pieces to be delaminated and/or deinked depends on the nature of the printed product, preferably printed film or laminate, or article and can be easily optimised by a skilled person.

After a preferred embodiment where delamination and deinking is conducted, the substrate of the printed product of the present invention is substantially devoid of printing ink, i.e. there should not be any observable remaining printing ink on the substrate. Accordingly, the substrate that has been delaminated and deinked according to this preferred embodiment of the present invention can be readily recycled by any conventional recycling method in the art, e.g. melt extrusion.

According to a preferred embodiment of the present invention, also the printing ink that has been removed from the substrate during the deinking step according to the present invention can be recycled and reused, for example by separation from the delamination and/or deinking medium and subsequent separation of the pigment(s), e.g. by treatment with suitable solvents and centrifugation. Methods for separating pigments from a printing ink composition are known in the art.

The present invention is furthermore related to an article, comprising a printed product, preferably printed film or laminate, as described above.

According to the present invention, said article is preferably a flexible packing or a tube.

Many articles such as food articles are stored in flexible packagings, i.e. packagings which are made of a material which shows some flexibility and can thus undergo certain modifications of its shape.

Flexible packagings are widely used in areas like food packaging (e.g., retortable bags, frozen food packaging, refrigerated food packaging, shelf stable food packaging, dry goods packaging, liquid food packaging, fast food wrappers and bags), pharmaceutical packaging (e.g., primary packaging, secondary packaging, booklets and instructions), personal hygiene packaging (e.g. soap packaging, hair care packaging, baby care packaging, feminine care packaging, male care packaging), home care packaging (e.g. detergent packaging, cleaner packaging), agricultural packaging (e.g., herbicide packaging, pest control packaging, fertilizer bags), industrial packaging (e.g. shopping bags, construction wrappers and bags), and pet care packaging (e.g., pet food bags, pet medical packaging, pet hygiene packaging).

The present invention is furthermore related to a method of preparing a printed product, preferably printed film or laminate, as described above, comprising the step of applying a one-component adhesive composition as described above onto a free surface of a substrate layer.

The present invention will now be described below in more detail by reference to non-limiting figures and examples.
Fig. 1 shows an illustration of a laminated product according to an embodiment of the present invention.
Figs. 2a-c show an embodiment of the delamination and/or deinking process of the present invention.

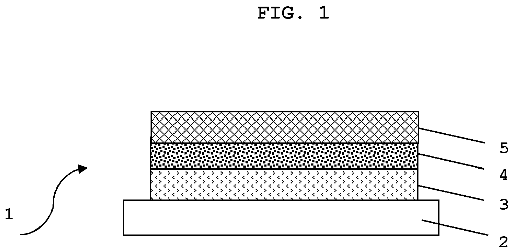

In Fig. 1 a laminated product 1 according to an embodiment of the present invention is shown. The laminated product 1 comprises a substrate 2.

On one surface of said substrate 2, there is applied a primer layer 3 according to the present invention. On one surface of said primer layer 3 that is remote from the substrate 2, there is provided a printing ink layer 4.

On top of said ink layer 4, there is provided an overprint varnish 5.

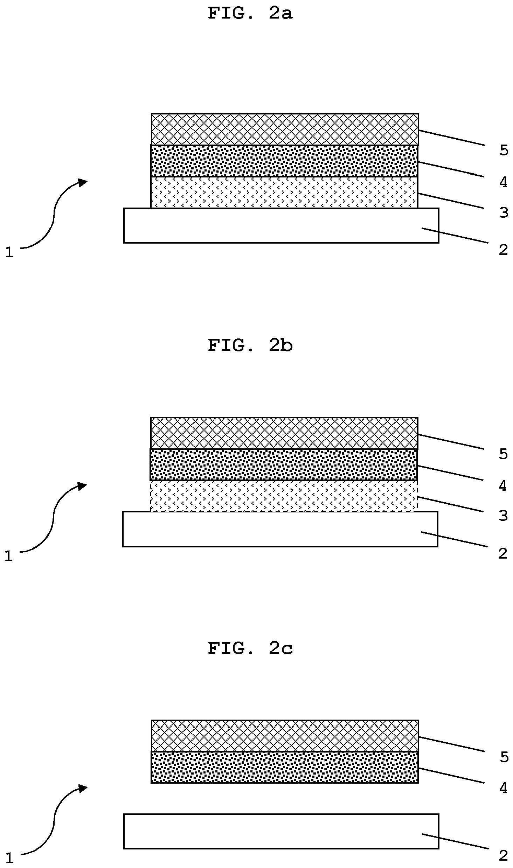

In Figs 2a to 2c, the delamination and/or deinking process of the present invention is schematically illustrated. Same reference numbers designate same components as in Fig. 1. In Fig. 2a, as an example a laminated product 1 according to the embodiment of Fig. 1 is shown.

In Fig. 2a, the laminated product 1 before delamination and/or deinking is shown. In Fig. 2b, it is shown that during the delamination and/or deinking step the primer layer 3 becomes dissolved (as illustrated by the dotted boundaries). In Fig. 2c, it is shown that after the delamination and/or deinking step the substrate 2 is separated from the printing ink layer 4 and overprint varnish layer 5, and can be recycled separately.

### Example 1

The following components were added together under stirring, so as to result in a primer composition according to the present invention:

**The wt.-% are selected such that they sum up to 100%.**

| **Component** | **Weight-%** |
|---|---|
| Acryloyl Morpholine | 25-30 |
| 2-functional water soluble aliphatic acrylate resin | 40-45 |
| Amine modified polyetheracrylate | 10-15 |
| Triethanoalmine | 5-10 |
| Flow and anti-crater additive | 0.1-1 |
| Photoinitiator (2-hydroxy-2-methyl-1-phenyl-1-propanone) | 1-5 |

The composition had a viscosity of 400 mPa.s (at 20°C and a shear rate of 100 s⁻¹, measured by a Brookfield CAP2000+ cone-plate with 30 mm diameter).

Said primer composition was printed onto a corona-treated polyethylene substrate (Omet Vary Flex F1 (D2-O2/OVF11_1 printing machine, printing speed: 60 m/min).

Onto the free surface of the cured primer layer, conventional printing ink layers were applied by a conventional flexographic printing process using typical flexible packing lamination inks in the following sequence: first a white ink layer, followed by a cyan ink layer, a magenta ink layer, a yellow ink layer and a black ink layer. Onto said printing ink layer stack, an overprint varnish layer was applied.

Into a 1000 ml beaker, 250 ml of an alkaline aqueous medium (2 wt.-% NaOH and 0,3 wt.-% of a surfactant (ECOLAB P3-stabilon PLUS 104792E) were added.

The alkaline aqueous medium was heated to 85°C, 10 g of the laminated products of example 1 were cut into pieces (about 1 cm²), put into the caustic solution and stirred (900 rpm). Deinking efficiency was checked every three minutes.

It was found that complete deinking had been achieved after 3 minutes.

In a conventional adhesion test using a Scotch 810 tape, the laminate according to example 1 provided good results.

### Comparative example 1

Example 1 was repeated, but the primer composition according to the present invention was replaced by a water-borne primer composition (AQUANTUM Alkali Strippable Primer from Siegwerk). This required a drying step of said water-borne primer before printing ink layers could be applied thereon.

In the same deinking test described in example 1, it was found that complete deinking had only been achieved after 15 minutes.

In a conventional adhesion test using a Scotch 810 tape, the laminate according to comparative example 1 showed failures.

### Example 2

The following components were added together under stirring, so as to result in a primer composition according to the present invention:

**The wt.-% are selected such that they sum up to 100%.**

| **Component** | **Weight-%** |
|---|---|
| Acryloyl Morpholine | 25-30 |
| 2-functional water soluble aliphatic acrylate resin | 40-45 |
| Amine modified polyetheracrylate | 10-15 |
| Triethanoalmine | 5-10 |
| Flow and anti-crater additive | 0.1-1 |
| Organic solvent (ethanol) | 1-5 |
| Photoinitiator (2-hydroxy-2-methyl-1-phenyl-1-propanone) | 1-5 |

Said primer composition was applied onto a c-PET film substrate with a rod coater (4 pm, speed 5), and then cured one time on an IST device (Mercury lamp 100%, 60 m/min). The composition of example 2 provided good flow and adhesion characteristics.

On top of the applied primer layer, a cyan ink layer was applied using a typical flexible packaging cyan ink with a rod coater (4 pm, speed 5), and then cured five times with the same setting as above for the primer layer.

On top of the applied ink layer, an overprint varnish layer was applied with a rod coater (4 pm, speed 5), and then cured in one pass using a UV lamp.

In the same deinking test described in example 1, it was found that complete deinking had been achieved after 10 minutes, which is a sufficient value for a tube laminate. In said embodiment, the composition according to example 2 provided even better results than the composition of example 1.

### Example 3

The following components were added together under stirring, so as to result in a primer composition according to the present invention:

| **Component** | **Weight-%** |
|---|---|
| Acryloyl Morpholine | 25-30 |
| 2-functional water soluble aliphatic acrylate resin | 40-45 |
| Amine modified polyetheracrylate | 10-15 |
| Triethanoalmine | 5-10 |
| Crosslinkable silicone surfactant | 0.1-1 |
| Organic solvent (ethanol) | 1-5 |
| Photoinitiator (2-hydroxy-2-methyl-1-phenyl-1-propanone) | 1-5 |

Said primer composition was applied onto various substrates (preferably c-PET) by the method as described in example 1. It was found that the resulting primer layer exhibited a low coefficient of friction (COF), but still allowed good overprinting with conventional flexible packaging printing inks.

## Claims

1. An actinic curable, preferably UV-curable primer composition, comprising
- a binder component, which contains an acrylate monomer and an acrylate oligomer or polymer, and
- optionally a photoinitiator,
**characterized in that** the acrylate monomer is acryloyl morpholine.

2. The primer composition according to claim 1, **characterized in that** the acrylate oligomer or polymer is selected from the group consisting of a difunctional aliphatic acrylate resin, an amine-modified polyether acrylate, and combinations thereof.

3. The primer composition according to claim 1 or 2, **characterized in that** the composition furthermore comprises at least one additive.

4. The primer composition according to claim 3, **characterized in that** the additive is selected from the group consisting of a stabilizer, a flow and anti-crater additive, a wetting agent, and combinations thereof.

5. The primer composition according to any of the preceding claims, **characterized in that** the composition furthermore comprises at least one organic solvent.

6. The primer composition according to any of the preceding claims, **characterized in that** the composition contains 50-95 wt.-%, preferably 70-90 wt.-% based on the entire amount of said composition, of said binder component.

7. The primer composition according to any of the preceding claims, **characterized in that** the composition contains 10-40 wt.-%, preferably 15-35 wt.-% based on the entire amount of said composition, of said acrylate monomer.

8. A printed product, preferably printed film or laminate (1), comprising a substrate (2) and a primer layer (3) applied onto one surface of said substrate (2), **characterized in that** the primer layer (3) is made from a primer composition according to any of the claims 1 to 7.

9. The printed product according to claim 8, **characterized in that** the printed product (1) further comprises a printing ink layer (4) on a side of said primer layer (3) that is not in contact with the substrate (2).

10. The printed product according to claim 8 or 9, **characterized in that** the substrate (2) is a plastic substrate.

11. The printed product according to any of the claims 8 to 10, **characterized in that** the printed product (1) further comprises an overprint varnish (5) on a free side of said printing ink layer (4).

12. Article, preferably a flexible packing, comprising a printed product, preferably printed film or laminate, according to any of the claims 8 to 11.

13. Method of delaminating and/or deinking a printed product, preferably printed film or laminate, according to any of claims 8 to 1, or an article according to claim 12, comprising a step of treating the printed product or article in an alkaline aqueous medium so as to dissolve the primer layer that is present in the printed product or the article.

14. The method according to claim 13, **characterized in that** said alkaline aqueous medium comprises 0,1 to 5 wt.%, preferably 0,5 to 3 wt.-%, based on the entire weight of the aqueous medium, of a base, preferably an alkali or earth alkali hydroxide, such as sodium hydroxide, and a surfactant.

15. The method according to claim 13 or 14, **characterized in that** in said step of treating the printed product or said article said aqueous medium is heated to a temperature in the range from 50 to 90°C, preferably 60 to 85°C, preferably for a time in the range between 1 to 10 min, preferably 2 to 6 min.
